# FASCICULE DE BREVET EUROPEEN

(11) **EP 0 958 024 B1**
(45) Date de publication et mention de la délivrance du brevet: **16.04.2003**
(21) Numéro de dépôt: 97943008.9
(22) Date de dépôt: 26.09.1997
(51) Int. Cl.: B01D 29/03

(54) **APPAREIL POUR L'EPAISSISSEMENT D'UNE SUSPENSION SOLIDE-LIQUIDE**
EINDICKUNGSVORRICHTUNG FÜR EINE FEST-FLÜSSIG-SUSPENSION
APPARATUS FOR THICKENING A SOLID-LIQUID SUSPENSION

(30) Priorité: 03.10.1996 FR 9612072
(43) Date de publication de la demande: 24.11.1999
(73) Titulaire: ONDEO DEGREMONT, 92500 Rueil-Malmaison (FR)
(72) Inventeur: BELE, Patrick, F-78100 Saint Germain en Laye (FR); PERRIN, Didier, F-95240 Cormeilles en Parisis (FR); VIRECOULON, Jean-Pierre, F-92500 Reuil-Malmaison (FR)
(74) Mandataire: Armengaud Ainé, Alain
(86) Numéro de dépôt international: FR9701700
(87) Numéro de publication internationale: WO98014261

(56) Documents cités:
- DE-A- 2 362 674
- DE-A- 3 920 196
- FR-A- 2 581 559

## Description

La présente invention concerne un appareil pour l'épaississement par drainage d'une suspension solide-liquide.

FR-A-2 581 559 décrit un appareil pour l'épaississement d'une suspension solide-liquide à fonctionnement continu, placé sur le refoulement de la pompe d'alimentation en boue. Cet appareil comporte une grille d'égouttage ou d'épaississement, plane et fixe, sur laquelle est délivrée en continu la boue à épaissir, cette boue étant râclée en permanence par un système de râclage à lames souples. La concentration de la boue augmente progressivement en avançant sur le champ de grille.

Cet appareil connu destiné plus particulièrement à l'épaississement des boues issues des stations d'épuration peut être utilisé soit en épaississement final , par exemple pour une utilisation agricole des boues, soit en pré-épaississement, en amont d'un appareil de déshydratation.

Si d'une manière générale, ce type d'appareil donne satisfaction en permettant d'épaissir une large gamme de concentrations de boue, il présente cependant l'inconvénient de fonctionner avec des débits hydrauliques relativement peu élevés, en particulier pour des suspensions solide-liquide faiblement concentrées, c'est-à-dire présentant des concentrations inférieures à 5 g/l. C'est d'ailleurs pour cette raison que cet appareil d'épaississement connu est en général alimenté à partir d'un ouvrage ou d'un dispositif intermédiaire ayant pour fonction d'élever la concentration de la suspension solide-liquide d'alimentation de l'appareil.

Par ailleurs, cet appareil connu est équipé d'une grille constituée d'une pluralité de barreaux de forte section et dont le pourcentage de vide est de l'ordre de 25%. Cette caractéristique contribue à la limitation hydraulique de ce type d'appareil.

Partant de cet état de la technique, la présente invention se propose d'y apporter des modifications en vue notamment d'augmenter, de façon significative, les débits hydrauliques admissibles et ceci en particulier pour les suspensions solide-liquide faiblement concentrées.

L'invention permet également de supprimer tout ouvrage ou dispositif intermédiaire destiné, dans les appareils selon l'état antérieur de la technique, à élever la concentration de la suspension solide-liquide d'alimentation de l'appareil.

De même, l'appareil selon l'invention permet de s'affranchir des variations de qualité et de concentration de suspensions solide-liquide générées par les ouvrages et dispositifs intermédiaires. Les paramètres d'exploitation de l'appareil (alimentation en réactifs, séquences de lavage ...) peuvent être optimisés compte-tenu du fait qu'il est alimenté par une suspension solide-liquide de concentration stable, par exemple une suspension eau-boues issue d'un bassin d'aération.

En conséquence, la présente invention concerne un appareil destiné à la séparation gravitaire solide-liquide, en particulier de boues des stations d'épuration, comportant une grille d'épaississement ou d'égouttage, plane et fixe, sur laquelle la boue est amenée en continu, cette boue étant raclée en permanence par un système de râclage à lames souples, cet appareil étant caractérisé en ce que ladite grille est formée d'une pluralité de barreaux dont les entrefers varient sur leurs longueurs de manière continue entre l'entrée et la sortie de l'appareil la valeur des entrefers des barreaux de la grille ainsi que leur section étant choisies de manière à obtenir un pourcentage de vide supérieur à 30% et pouvant atteindre 50%.

Selon une autre caractéristique de l'invention, la grille d'épaississement peut être inclinée, avec une pente ascendante entre l'entrée et la sortie de l'appareil, cette pente pouvant être comprise entre 1 et 40°, de préférence entre 2 et 15°.

Selon la présente invention, on peut également utiliser une grille dont les barreaux présentent une section réduite afin d'augmenter encore, de façon significative, le pourcentage de vide. Cette caractéristique, combinée avec celle relative au choix de la valeur de l'entrefer des barreaux de la grille d'égouttage permet, selon l'invention d'obtenir une grille d'égouttage présentant un pourcentage de vide supérieur à 30% et pouvant atteindre 50%.

D'autres caractéristiques et avantages de la présente invention ressortiront de la description faite ci-après en référence aux dessins annexés qui en illustrent des exemples de réalisation dépourvus de tout caractère limitatif.

Sur les dessins :
- La figure 1 est une vue en plan de l'appareil perfectionné selon un mode de réalisation de l'invention; et
- La figure 2 est une vue schématique de l'appareil selon l'invention en coupe longitudinale.

En ce qui concerne la description générale de l'appareil d'épaississement auquel se réfère la présente invention, on pourra se reporter à la description du brevet FR-A-2 581 559, dont l'invention constitue un perfectionnement.

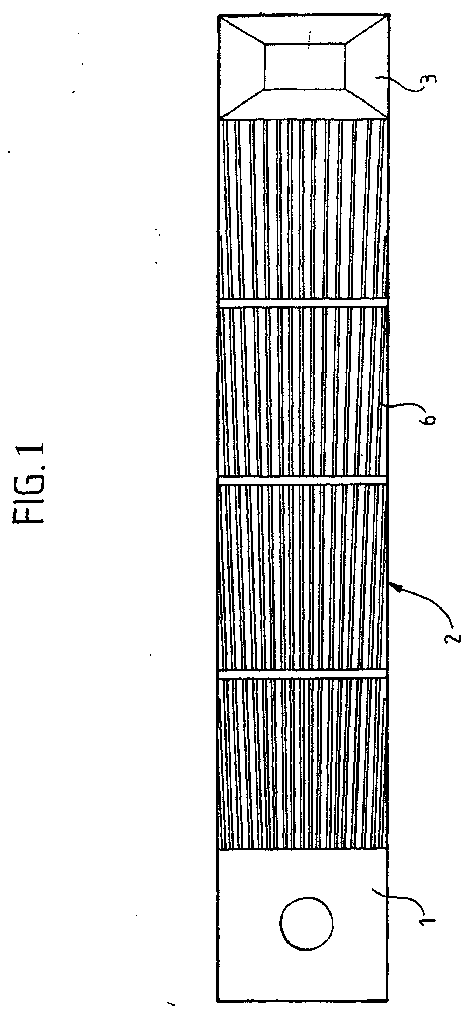

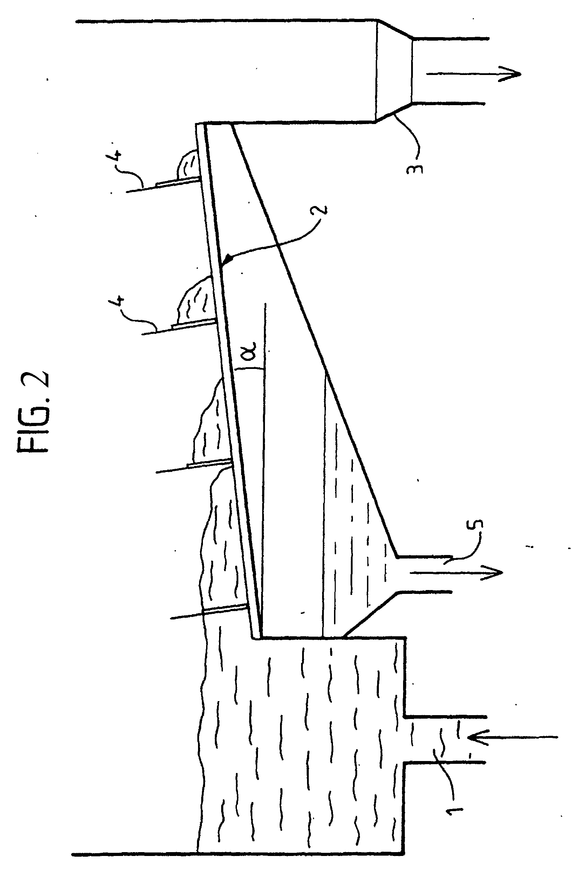

En se référant aux figures 1 et 2, on y a représenté de façon schématique, un appareil d'épaississement comportant une arrivée des boues 1, une grille d'égouttage ou d'épaississement 2, plane et fixe, sur laquelle sont épandues en continu, les boues, celles-ci étant râclées en permanence par des lames souples 4, les boues épaissies étant recueillies en 3 et l'eau d'égouttage étant évacuée en 5. Dans cet exemple de réalisation, les entrefers des barreaux 6 constituant la grille d'égouttage 2 vont en augmentant de l'entrée 1 vers la sortie 3 de l'appareil.

Bien entendu, on peut également prévoir que l'entrefer des barreaux va en diminuant de l'entrée 1 vers la sortie 2 de l'appareil., cette variation étant continue.

Dans l'exemple de réalisation illustré par la figure 1 la grille d'égouttage 2 est réalisée de manière que l'entrefer des barreaux 6 constituant la grille d'égouttage 2, augmente de façon continue entre l'entrée 1 et la sortie 3 de l'appareil.

Ainsi qu'on l'a spécifié ci-dessus, les caractéristiques des entrefers des barreaux de la grille d'égouttage 2 ainsi que leurs variations sont définies à partir de la nature de la suspension solide-liquide à épaissir, de sa concentration, du débit d'alimentation de l'appareil et également à partir d'essais pilotes.

En se référant à la figure 2, on voit que selon la présente invention, la grille d'égouttage 2 est inclinée sur l'horizontale selon un angle α, la pente de la grille étant ascendante entre l'entrée 1 et la sortie 3 de l'appareil et l'angle α étant compris entre 1 et 40° de préférence entre 2 et 15°. Cette caractéristique permet d'augmenter le temps de rétention de la suspension solide-liquide sur la grille d'égouttage 2.
A) Caractéristiques de la suspension solide-liquide :
   - boues d'aération prolongée d'eau résiduaire urbaine
   - concentration : 3 à 5 gr/l
   - indice de Mohlman ; 150
B) Caractéristiques de la grille selon l'art antérieur (FR-A-2 581 559)
   - largeur grille : 500 mm
   - longueur grille : 1500 mm
   - pente : 0 degré
   - entrefer : 600 microns
   - largeur barreau : 1,8 mm
C) Caractéristiques de la grille selon l'invention
   - largeur grille : 500 mm
   - longueur grille : 1500 mm
   - pente : 4 degrés
   - entrefers : 350 microns sur 750 mm, puis 600 microns sur 750 mm
   - largeur barreau : 1 mm.
D) Performances
   - Grille selon la technique antérieure :
   - Débit hydraulique à l'alimentation de la grille : 4 à 6 m3/h
   - Siccité en sortie de la grille : 6%
   - Grille perfectionnée selon l'invention :
   - Débit hydraulique à l'alimentation de la grille : 15 à 22 m3/h
   - Siccité en sortie de la grille : 6%

Ainsi qu'on le voit, l'invention permet au minimum de tripler le flux massique des boues traitées sur ce type d'équipement.

Il demeure bien entendu que la présente invention n'est pas limitée aux exemples de réalisation décrits et/ou représentés ici mais qu'elle en englobe toutes les variantes entrant dans le cadre des revendications annexées.

## Revendications

1. Appareil destiné à la séparation gravitaire solide-liquide, en particulier de boues des stations d'épuration comportant une grille (2) d'épaississement ou d'égouttage, plane et fixe, sur laquelle la boue est amenée en continu, cette boue étant râclée en permanence par un système de raclage à lames souples (4), **caractérisé en ce que** ladite grille est constituée d'une pluralité de barreaux (6,6') dont les entrefers varient sur leurs longueurs de manière continue entre l'entrée (1) et la sortie (3) de l'appareil, la valeur des entrefers des barreaux de la grille (2) ainsi que leur section étant choisies de manière à obtenir un pourcentage de vide supérieur à 30% et pouvant atteindre 50%.

2. Appareil selon la revendication 1 **caractérisé en ce que** l'entrefer des barreaux va en augmentant de l'entrée (1) vers la sortie (3) de l'appareil.

3. Appareil selon la revendication 1 **caractérisé en ce que** l'entrefer des barreaux va en diminuant de l'entrée vers la sortie de l'appareil.

4. Appareil selon l'une quelconque des revendications précédentes **caractérisé en ce que** ladite grille d'égouttage ou d'épaississement (2) est inclinée sur l'horizontale selon une pente (α,) ascendante entre l'entrée et la sortie de l'appareil, cette pente étant comprise entre 1 et 40°, de préférence entre 2 et 15°.

## Claims

1. Apparatus for solid-liquid gravity separation, particularly of sludge from purification stations comprising a planar, fixed thickening or draining grate (2), to which the sludge is continuously supplied, said sludge being permanently scraped by a scraping system having flexible blades (4), **characterized in that** said grate is constituted by a plurality of bars (6, 6'), whose gaps vary continuously over their lengths between the inlet (1) and the outlet (3) of the apparatus, the value of the gaps between the bars of the grate (2), together with their cross-section being chosen so as to obtain a percentage vacuum exceeding 30% and which may reach 50%.

2. Apparatus according to claim 1, **characterized in that** the gap between the bars increases from the inlet (1) to the outlet (3) of the apparatus.

3. Apparatus according to claim 1, **characterized in that** the gap between the bars decreases from the inlet to the outlet of the apparatus.

4. Apparatus according to any one of the preceding claims, **characterized in that** said draining or thickening grate (2) is inclined to the horizontal by a rising gradient (α) between the inlet and outlet of the apparatus, said gradient being between 1 and 40%, preferably between 2 and 15%.

## Patentansprüche

1. Vorrichtung zur Fest-Flüssig-Trennung, insbesondere von Schlämmen aus Kläranlagen unter Schwerkraftwirkung, mit einem ebenen, festen Eindick- oder Abtropf-Rost (2), auf den der Schlamm kontinuierlich aufgebracht wird, wobei dieser Schlamm ständig von einem Rakelsystem mit nachgiebigen Blättern (4) abgerakelt wird, **dadurch gekennzeichnet, dass** der besagte Rost von einer Mehrzahl von Stangen (6, 6') gebildet ist, deren Zwischenräume über ihre Längserstreckung sich kontinuierlich vom Eingang (1) zum Ausgang (3) der Vorrichtung ändern, wobei die Breite der Zwischenräume der Stangen des Rostes (2) sowie ihr Querschnitt so gewählt sind, dass ein oberhalb von 30 % liegender Lichtraum-Anteil erhalten wird, der 50 % erreichen kann.

2. Vorrichtung nach Anspruch 1, **dadurch gekennzeichnet, dass** der Zwischenraum der Stangen vom Eingang (1) zum Ausgang (3) der Vorrichtung zunehmend verläuft.

3. Vorrichtung nach Anspruch 1, **dadurch gekennzeichnet, dass** der Zwischenraum der Stangen vom Eingang zum Ausgang der Vorrichtung abnehmend verläuft.

4. Vorrichtung nach einem der vorstehenden Ansprüche, **dadurch gekennzeichnet, dass** der Abtropf- oder Eindick-Rost (2) mit einer vom Eingang zum Ausgang der Vorrichtung ansteigenden Neigung (α) zur Horizontalen geneigt ist, die zwischen 1 und 40°, vorzugsweise zwischen 2 und 15° liegt.
